Europäisches Patentamt

**European Patent Office**

**Office européen des brevets**

(11) Numéro de publication : **0 065 902**
**B1**

(12) **FASCICULE DE BREVET EUROPÉEN**

(45) Date de publication du fascicule du brevet :
**28.08.85**

(21) Numéro de dépôt : **82400848.6**

(22) Date de dépôt : **07.05.82**

(51) Int. Cl.⁴ : **F 03 D 3/04**

(54) **Dispositif de récupération de l'énergie du vent.**

(30) Priorité : **08.05.81 FR 8109183**

(43) Date de publication de la demande :
**01.12.82 Bulletin 82/48**

(45) Mention de la délivrance du brevet :
**28.08.85 Bulletin 85/35**

(84) Etats contractants désignés :
**AT BE CH DE FR GB IT LI LU NL SE**

(56) Documents cités :
**DE-C- 330 928**
**FR-A- 429 705**
**FR-A- 1 009 005**
**FR-A- 2 390 595**

(73) Titulaire : **Binder, Adam**
**52, rue de la Tour d'Auvergne**
**F-75009 Paris (FR)**

(72) Inventeur : **Binder, Adam**
**52, rue de la Tour d'Auvergne**
**F-75009 Paris (FR)**

(74) Mandataire : **Serin, Jean-Pierre et al**
**Cabinet PIERRE LOYER 18, rue de Mogador**
**F-75009 Paris (FR)**

EP 0 065 902 B1

Jouve, 18, rue St-Denis, 75001 Paris, France

# Description

L'invention concerne un dispositif de récupération d'énergie éolienne.

On connaît des dispositifs permettant de récupérer l'énergie du vent et comportant notamment plusieurs turbines accouplées entre elles. Les mouvements de ces turbines sont rendus solidaires grâce à une transmission appropriée (FR-A-1 194 781).

On connaît d'autres dispositifs tels que celui décrit dans le brevet FR-A-2 291 380 comportant un moteur utilisant l'énergie du vent à l'aide d'un fût vertical, servant de support à plusieurs rotors à axe vertical, régulièrement disposés autour du fût. Cependant, un tel dispositif ne prévoit pas l'association des turbines pour concentrer leur efforts par rapport au vent. Par ailleurs, on en prévoit pas une orientation des turbines par rapport à la direction du vent et de plus celles-ci ne sont pas protégées lors de rafales de vent.

Un dispositif de récupération d'énergie éolienne a été décrit dans le brevet FR-A-2 390 595 du demandeur et comporte une turbine centrale et un ensemble de turbines satellites, chaque turbine étant pourvue d'un rotor à pales, des moyens d'orientation des courants d'air à l'intérieur de l'ensemble de turbines et des moyens pour concentrer l'effort de rotation des rotors de turbines satellites, permettant de mieux récupérer encore l'énergie. Cependant, un tel dispositif, bien que donnant des résultats très satisfaisants est complexe dans sa structure.

Il est également connu par le brevet DE-A-330 928 de disposer des trous dans les pales d'une éolienne afin d'augmenter la turbulence, mais ces dispositions fragilisent la structure.

La présente invention a pour but de pallier ces inconvénients. Un but de l'invention est de récupérer l'énergie éolienne au moyen d'un dispositif de structure simple, facile à construire et économique.

Un autre but de la présente invention est de fournir un tel dispositif ayant une très grande résistance au vent et permettant en outre d'amortir les coups de vent brusques afin de protéger les parties en aval du dispositif de récupération.

Pour parvenir à ces buts, l'invention propose un dispositif de récupération d'énergie éolienne comportant une turbine centrale munie d'un rotor, d'un arbre vertical et de pales allongées axialement par rapport à cet arbre, les pales étant orientées radialement, en plan horizontal, et comportant des moyens de récupération de l'énergie cinétique, des moyens orientables de masquage des pales, et des moyens de maintien de la turbine, caractérisé en ce que les moyens de récupération de l'énergie cinétique sont constitués d'une pluralité d'alvéoles prévue dans l'aire active de chacune des pales. Les pales sont pleines comme dans les dispositifs connus, mais par contre elles possèdent des alvéoles sur la surface soumise à la force du vent, par lesquelles le vent est capté. Ainsi, le vent ne glisse pas le long de ladite surface, mais au contraire s'engouffre dans les alvéoles, ce qui permet d'augmenter le volume d'énergie récupérée. Par ailleurs, on masque les pales par un panneau plein, mobile en rotation autour du rotor et placé de façon que les pales qui avancent dans le sens opposé au vent soient protégées de celui-ci et donc que leur mouvement ne soit pas ralenti.

La description suivante en regard des dessins annexés à titre d'exemple non limitatif permettra de mieux comprendre comment la présente invention peut être mise en pratique.

La figure 1 est une vue en coupe selon un plan horizontal du dispositif selon la présente invention ;

La figure 2 est une vue de dessus du dispositif ;

La figure 3 est une vue d'une pale ;

La figure 4 est une vue du dispositif selon l'invention, en coupe selon la ligne IV-IV de la figure 1 ;

La figure 5 est une vue d'un moyen amortisseur permettant de compenser les coups de vent du dispositif suivant l'invention ;

La figure 6 est une vue en coupe selon la ligne VI-VI de la figure 5 ;

La figure 7 est une vue schématique d'une transmission ;

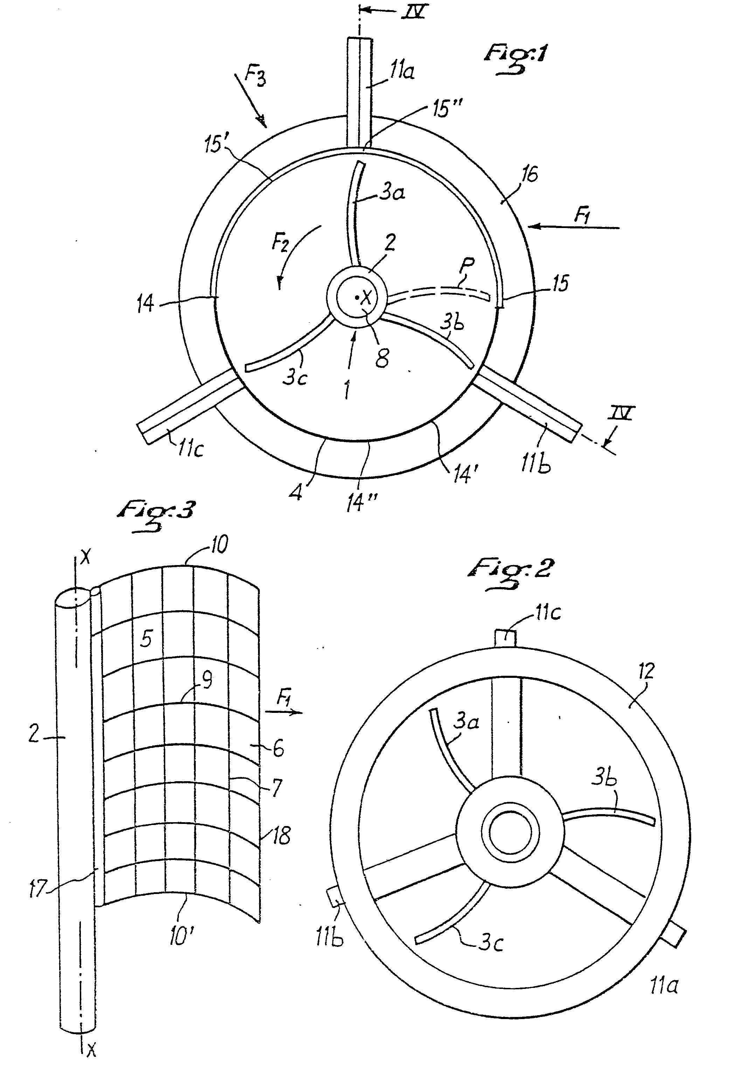

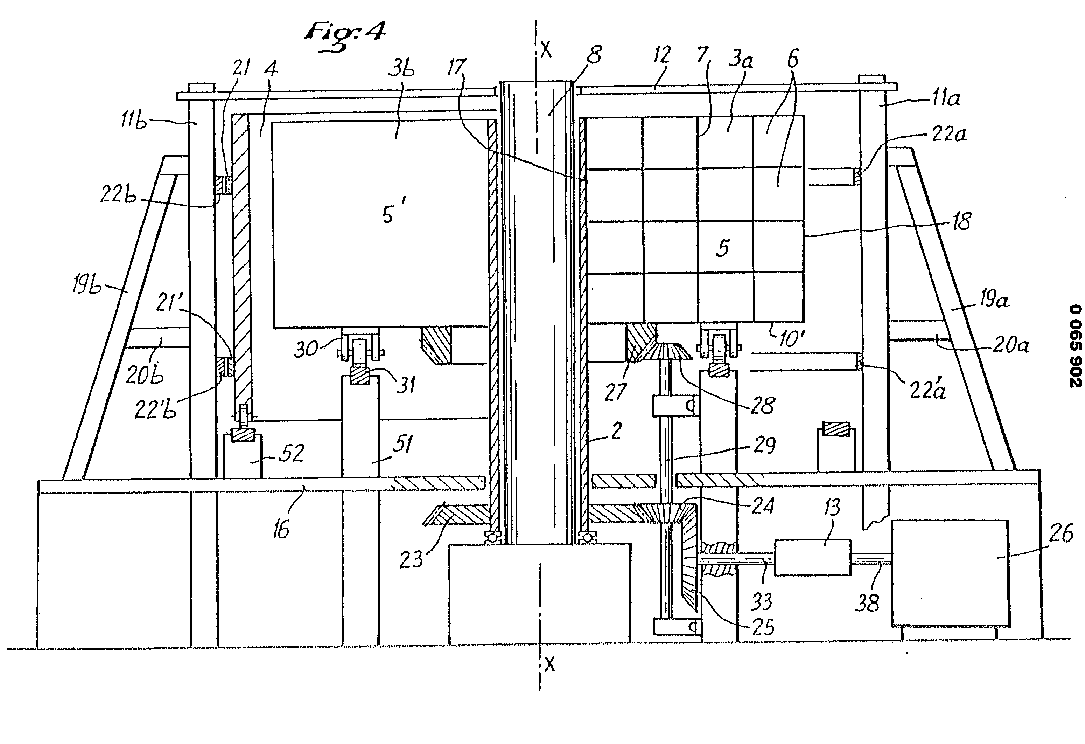

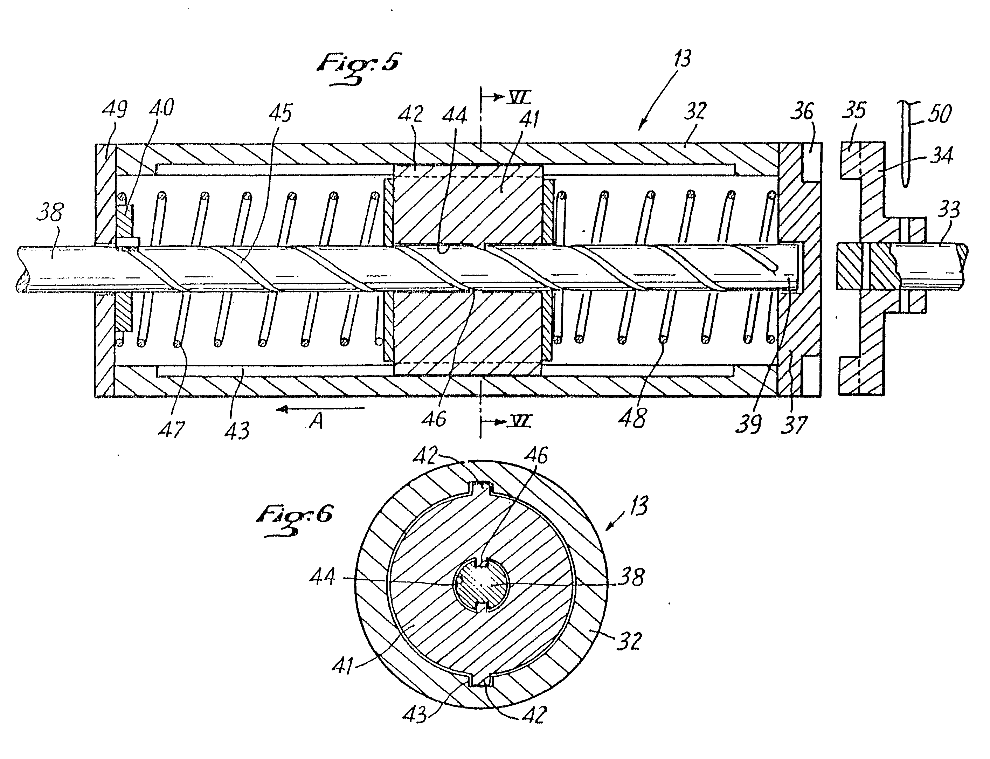

Le dispositif de récupération d'énergie éolienne selon l'invention comporte une turbine centrale 1 constituée d'un rotor 2 et de pales 3. Ces pales sont au moins au nombre de deux. Elles sont allongées axialement en position verticale. Elles sont orientées radialement dans un plan horizontal. Un moyen de protection permet de protéger les pales qui ne sont pas entraînées selon la direction du vent. Les pales ont une surface active qui n'est pas lisse, c'est-à-dire que la surface 5 soumise à l'action du vent comporte des alvéoles 6 dans lesquelles s'engagent des courants d'air. Les alvéoles sont adaptées à la dimension des pales qui n'est pas délimitée. Ces alvéoles sont formées (figure 3) par au moins une série d'entretoises sensiblement parallèles entre elles. Une première série 7 est sensiblement parallèle à l'axe 8 du rotor et une deuxième série 9 est sensiblement parallèle à au moins un chant 10 horizontal des pales. Par ailleurs, les moyens de protection 4 des pales sont orientables selon la direction du vent et sont constitués par un panneau plein mobile en rotation autour du rotor. De préférence, le panneau est demi-cylindrique, à base demi-circulaire en section droite transversale, les bords rectilignes verticaux du panneau étant dans un plan passant par l'axe 8 du rotor et parallèle à la direction du vent, le panneau constitue aussi des moyens d'annulation de l'action du vent. De plus les moyens de maintien de la turbine 1 sont constitués par au moins trois piliers verticaux 11a, 11b, 11c, reliés par au moins une couronne supérieure circulaire 12 (voir figure 2), formant avec les piliers un bloc rigide résistant à l'action du vent. Le dispositif comporte en outre un moyen amortisseur de compensation des coups de vent.

En se reportant plus particulièrement aux figures 1, 2 et 3, on voit qu'un mode de réalisation préféré du dispositif selon l'invention comporte une turbine centrale 1 constituée d'un rotor 2. Ce rotor 2 est cylindrique, et tourne sur un axe cylindrique central 8, vertical, plein, d'axe X-X. Trois pales 3 sont solidaires du rotor 2 et sont disposées verticalement en formant des angles de 120° sur le rotor 2. Ces pales sont constituées par des tôles légèrement bombées de façon à présenter une surface active concave. Si la direction du vent est selon la flèche $F_1$, les pales 3a, 3b et 3c (voir figure 1) tournent dans le sens de la flèche $F_2$. La pale 3a de la figure 1 est soumise à l'action du vent. Par contre, le panneau 4 qui est demi-cylindrique est disposé de façon à ce que ses bords verticaux 14 et 15, rectilignes, forment avec l'axe X-X un plan parallèle à la direction du vent et qu'il empêche ainsi que les pales 3b et 3c qui tournent dans le sens de la flèche $F_2$, subissent l'action contraire du vent dirigé selon la flèche $F_1$. Les piliers 11a, 11b, 11c sont disposés à 120° les uns des autres autour de l'axe X-X. Par ailleurs, on peut prévoir une couronne inférieure 16 pour consolider l'ensemble du dispositif. Les pales qui sont concaves possèdent des chants 10 et 10' horizontaux qui sont donc incurvés et des bords latéraux 17 et 18 rectilignes, parallèles à l'axe X-X, verticaux. La couronne 16 constitue un plancher pour l'ensemble.

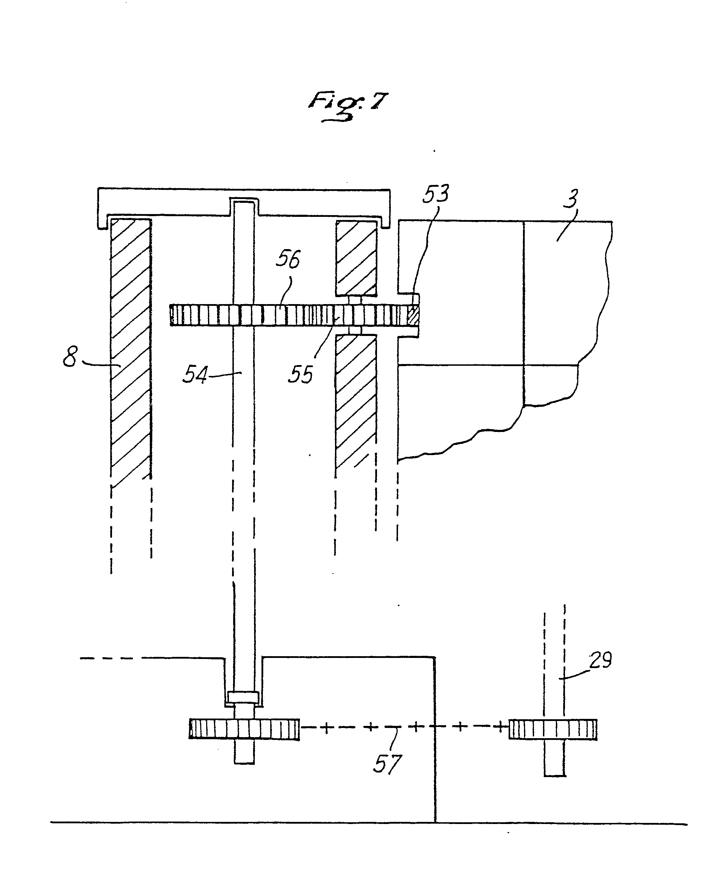

Chaque pale possède une surface 5 concave comprise entre les chants horizontaux supérieur et inférieur 10, 10' et les bords latéraux 17 et 18. Cette surface, contrairement aux dispositifs connus n'est pas lisse. Elle constitue une aire active, c'est-à-dire récupérant elle-même l'énergie, puisque le vent s'engouffre dans les alvéoles 6. Par contre, la face inactive 5' est lisse et convexe (voir figure 4).

Les alvéoles 6 prévues sur la pale sont constituées par une première série d'entretoises 7, sensiblement parallèles entre elles, de préférence parallèles à l'axe X-X, c'est-à-dire verticales. Elles sont par ailleurs, formées en outre par une deuxième série d'entretoises 9 parallèles les unes aux autres, de préférence parallèles aux chants horizontaux 10 et 10'. Cependant, on peut prévoir que la première série 7 et la deuxième série 9 d'entretoises, puissent ne pas être parallèles respectivement à l'axe X-X et aux chants horizontaux 10, 10'. Mais les séries d'entretoises doivent constituer des alvéoles. Celles-ci sont en forme de polygones (en projection sur un plan passant par l'axe X-X), les polygones étant de forme quelconque, mais ayant une épaisseur dans le sens perpendiculaire à la surface de la pale. Le vent arrivant sur la surface de la pale, du côté concave, vient s'engouffrer dans les alvéoles et ne glisse pas sur l'aire 10 comprise entre les chants 10, 10' et les bords 17, 18. Ainsi, la force du vent qui s'engouffre dans les alvéoles 6 fait tourner les pales beaucoup plus rapidement que si leur surface active était lisse. On récupère alors beaucoup plus d'énergie cinétique.

Le panneau 4 masque les pales qui tournent dans le sens de la flèche $F_2$ et qui à certains moments viennent en opposition avec la direction du vent $F_1$, c'est-à-dire que jusqu'à la position P représentée en pointillé, position telle que la pale est sensiblement parallèle à la direction $F_1$ du vent, elles sont masquées par le panneau 4.

Le panneau 4 est de préférence demi-cylindrique d'axe X-X et mobile autour de celui-ci. Ainsi quand la direction du vent change, par exemple si le vent tourne et a une direction selon la flèche $F_2$, on fait effectuer au panneau 4 un pivotement autour de l'axe X-X et le panneau 4 vient se placer dans une position telle que son bord 14 prend alors la position 14'. De façon correspondante, le bord 15 vient prendre la position 15'. On voit donc que les bords rectilignes du panneau 14, 15, verticaux sont, toujours amenés dans un plan passant par l'axe X-X du rotor et parallèle à la direction du vent. Ainsi, les pales qui ne sont pas soumises directement à l'action du vent, et qui avancent en sens contraire du vent, ne sont pas freinées par celui-ci. On a donc la possibilité de récupérer beaucoup plus d'énergie éolienne puisque les pales, n'étant pas freinées par le vent, vont pouvoir tourner plus vite.

Selon la figure 4, on voit que les piliers 11a et 11b, verticaux, parallèles à l'axe X-X comportent des étançons 19a-19c, inclinés par rapport à la verticale et des renforts 20a, 20b horizontaux. On voit également des pales 3a et 3b, dont les bords latéraux 17 et 18 sont verticaux. Le panneau 4 comporte deux profilés de guidage 21 et 21' semi-circulaires, sensiblement horizontaux et d'axe X-X. De plus, les piliers 11a, 11b supportent chacun des portions de profilés 22a et 22'a et respectivement 22b, 22'b qui sont eux aussi horizontaux, circulaires, d'axe X-X et venant en regard des profilés 21 et 21'. Les profilés 22 et 22' sont des profilés en U servant de glissière aux profilés 21, 21'. Ainsi, le panneau 4 peut tourner autour de l'axe X-X, il tourne aussi sur un rail 52 circulaire, surélevé sur le sol. Son orientation peut être commandée par tout moyen approprié semi-automatique ou automatique, en fonction de la direction du vent.

Si la direction du vent est dans le sens de la flèche $F_1$ (voir figure 4) on voit que les piliers 11a, 11b et la couronne circulaire 12 forment un bloc rigide par rapport à la direction du vent, ce bloc peut alors résister particulièrement bien aux rafales de vent. L'orientation du panneau 4 peut être assurée par tout moyen approprié, en fonction de la direction du vent, de façon à masquer les pales, avançant en sens inverse du vent, mais l'orientation du panneau 4 peut aussi être réglée de façon à ce que le panneau 4 masque toutes les pales de l'action du vent, les bords 14 et 15 venant alors en position 14" et 15" (voir figure 1). La convexité du panneau est dans ce cas dirigée vers le vent, c'est-à-dire que le panneau forme alors écran contre le vent. Ceci permet notamment de supprimer l'action du vent sur les pales et d'arrêter le dispositif, un opérateur pouvant effectuer des réparations éventuelles des pales.

Lorsque la turbine tourne, l'énergie est transmise par l'intermédiaire d'une couronne dentée 23 solidaire du rotor 2 à un train d'engrenages 24, 25 qui la transmet par l'intermédiaire d'un amortisseur d'à-coups 13 à un appareil utilisateur tel qu'un générateur électrique 26.

Selon la réalisation préférentielle représentée à la figure 4, l'énergie est également transmise au moyen d'une couronne dentée 27 montée à la base des pales 3 à un pignon 28 solidaire de l'arbre 29 du pignon 24 du train d'engrenages 24, 25. Cela permet de soulager l'effort imposé au rotor 2. On peut également prévoir que le rotor 2 entraîne, au moyen de pignons planétaires montés à son sommet, un arbre tournant dans l'axe 8 qui est creux dans ce cas, ledit arbre étant relié par des pignons au train d'engrenages 24, 25.

Afin de supporter le poids des pales 3, on prévoit une couronne 30 fixée également à l'arête 10' des pales 3. Cette couronne 30 est munie de galets qui roulent sur un chemin de roulement circulaire 31, supporté par des piliers 51.

Le dispositif amortisseur 13 comporte une gaine cylindrique 32, montée sur un palier non représenté. Cette gaine est solidarisée d'un côté à un arbre 33, relié à l'éolienne, au moyen d'une pièce 34, pouvant coulisser sur l'arbre 33 et dont les bords sont pourvus de plots 35 répartis sur la périphérie pénétrant dans des échancrures 36 du fond 37 de la gaine. La pièce 34 est solidarisée à l'arbre 33 au moyen d'une goupille 50.

Un arbre 38, portant à une extrémité le pignon 25, pénètre dans la gaine et y est supporté aux deux extrémités de la gaine par des paliers. L'extrémité 39 est en butée sur le fond 37 de la gaine tandis que le blocage horizontal est assuré contre le fond 49 de la gaine, grâce à une butée 40 solidarisée à l'arbre 38 par une clavette. L'arbre 38 relié au dispositif utilisateur 26 est pourvu de deux rainures hélicoïdales 45, de même pas, décalées de 180°, sur toute sa partie intérieure à la gaine 32. Un curseur cylindrique 41 est disposé dansl la gaine 32, solidaire en rotation de celle-ci grâce à au moins deux parties en saillie 42 qui peuvent coulisser librement dans des rainures longitudinales 43 pratiquées dans la paroi interne de la gaine.

Le curseur 41 est d'autre part pourvu d'un alésage central 44 du diamètre de l'arbre 38 et dans lequel sont pratiquées deux nervures hélicoïdales 46, de même pas, décalées de 180° et destinées à s'engager dans les rainures 45 de l'arbre 38.

Des deux côtés du curseur sont disposés des ressorts 47 et 48 s'appuyant d'un côté sur le curseur 41 et de l'autre sur le fond 49 pour le ressort 47 et sur le fond 37 pour le ressort 48.

Le fonctionnement de l'amortisseur est le suivant : lorsque la pièce 34 pénètre dans les évidements 36 du fond 37 par ses plots 35 et que la goupille 50 est mise en place, la gaine est solidarisée en rotation avec l'arbre 33 transmettant l'énergie en provenance de l'éolienne. Elle commence à tourner dès que l'arbre 33 est mis en rotation et le curseur qui tourne avec elle avance dans le sens de la flèche A en se vissant sur l'arbre 45, contre la pression du ressort 47. Peu à peu, alors que la pression du ressort se fait plus forte et empêche le curseur de progresser, celui-ci entraîne l'arbre 38. Au bout d'un certain temps, le système des forces étant en équilibre, la vitesse de rotation de l'arbre 38 est la même que celle de la gaine 32 et donc de l'arbre 33.

Si un coup de vent survient, la vitesse de l'arbre 33 augmente brutalement et donc celle de la gaine. Le curseur va donc progresser dans le sens de la flèche A et amener progressivement l'arbre 38 à tourner à la même vitesse. Si à l'inverse, le vent tombe brusquement, la gaine 32 va tourner plus lentement que l'arbre 38, le curseur va alors se déplacer dans le sens opposé contre le ressort 48 en tournant dans l'autre sens relativement à l'arbre 38. A l'équilibre des forces, l'arbre 38 va tourner à la même vitesse que la gaine 32 et l'arbre 33. Les variations brusques de vitesses de rotation sont ainsi amorties et le matériel est protégé contre les à-coups.

Dans une version simplifiée de l'amortisseur, on peut réaliser le ressort 47 en ressort de poussée et le ressort 48 en ressort de traction. La course du curseur 41 à l'intérieur de la gaine 32 dans le sens de la flèche A sera donc plus longue et l'amortissement des coups de vent plus progressif.

Bien entendu, la présente invention admet de nombreuses variantes d'exécution, par exemple le nombre des pales et la dimension des alvéoles selon la taille des pales qui n'est pas limitée.

L'éolienne est caractéristique par l'ossature formée par les piliers et les couronnes, ce qui fait qu'elle résiste à toute épreuve, par les pales qui ont des alvéoles permettant de récupérer une énergie beaucoup plus importante qu'avec des dispositifs connus et par le dispositif amortisseur des rafales de vent.

L'éolienne selon l'invention pouvant être de grande hauteur, il est avantageux de prévoir au voisinage du bord supérieur des pales, un ou plusieurs anneaux solidarisant les pales entre elles pour augmenter leur résistance aux coups de vent.

Il est également avantageux de prévoir à la base du rotor 2, au moins un moteur auxiliaire de démarrage, engrenant, par exemple sur la couronne dentée 23, afin d'amorcer la rotation de l'éolienne après un arrêt pour quelque cause que ce soit.

Sur la figure 7 on a représenté un schéma symbolique d'une transmission de mouvement pour récupérer de l'énergie dans le cas des pales de grande hauteur. Les pales 3 portent à leur partie supérieure une couronne dentée intérieure 53 qui transmet son mouvement à un axe 54 par l'intermédiaire d'un jeu d'engrenages comprenant de préférence trois planétaires dont un seul 55 est représenté, et un engrenage principal 56. A la base de l'éolienne, l'axe 54 transmet son mouvement à l'arbre 29 par l'intermédiaire d'une transmission à chaîne ou à engrenages symbolisée en 57.

## Revendications

1. Dispositif de récupération d'énergie éolienne comportant une turbine centrale munie d'un rotor (2), d'un arbre vertical (8) et de pales (3) allongées axialement par rapport à cet arbre, les pales étant orientées radialement, en plan horizontal, et comportant des moyens de récupération de l'énergie cinétique, des moyens orientables de masquage des pales, et des moyens de maintien de la turbine, caractérisé en ce que les moyens (6) de récupération de l'énergie cinétique sont constitués d'une pluralité d'alvéoles prévue dans l'aire active de chacune des pales.

2. Dispositif selon la revendication 1, caractérisé en ce que lesdits moyens (6) sont formés par au moins une série d'entretoises (7) sensiblement parallèles entre elles. .

3. Dispositif selon la revendication 2, caractérisé en ce que les alvéoles (6) sont formés par deux séries d'entretoises, la première série (7) étant sensiblement parallèle à l'axe vertical du rotor et la seconde série (9) étant sensiblement parallèle au chant horizontal des pales.

4. Dispositif selon la revendication 3, caractérisé en ce que les moyens (4) de masquage des pales sont constitués par un panneau plein, mobile en rotation autour du rotor.

5. Dispositif selon la revendication 4, caractérisé en ce que le panneau (4) est semi-cylindrique, les bords rectilignes verticaux du panneau étant dans un plan passant par l'axe (X-X) du rotor et parallèle à la direction du vent.

6. Dispositif selon la revendication 4, caractérisé en ce que le panneau (4) est prévu pour être réglable en position adéquate indépendamment de la direction du vent, de manière à masquer partiellement ou totalement, les pales en fonction de la force du vent.

7. Dispositif selon l'une quelconque des revendications 1 à 6, caractérisé en ce que les moyens de maintien de la turbine sont constitués par au moins trois piliers (11a, 11b, 11c) verticaux, reliés par au moins une couronne (12) circulaire dans un plan horizontal, les piliers et la couronne formant un bloc rigide, résistant à toute sollicitation.

8. Dispositif selon l'une quelconque des revendications 1 à 7, caractérisé en ce qu'il comporte des moyens amortisseurs (13) permettant d'amortir les coups de vent.

9. Dispositif selon la revendication 8, caractérisé par le fait que les moyens amortisseurs comportent :
— une gaine cylindrique rigide (32) pouvant être solidarisée à un premier arbre (33) transmettant l'énergie de la turbine (1),
— un second arbre (38), montée d'un côté dans la gaine, coaxialement et de manière à pouvoir tourner, dont l'autre côté est relié au dispositif utilisateur, et pourvu d'au moins une rainure hélicoïdale (45) progressant en tournant dans le sens de rotation de la gaine vers l'extrémité reliée au dispositif utilisateur,
— un curseur (41) cylindrique pouvant coulisser longitudinalement dans la gaine et solidarisés à elle en rotation par au moins une nervure (42) pouvant circuler dans une rainure longitudinale (43) de celle-ci, le curseur (41) étant pourvu d'un alésage axial (44) traversé par le second arbre (38) et de même diamètre, avec au moins une nervure hélicoïdale (46) correspondant à la rainure (45) de l'arbre (38),
— deux ressorts (47, 48) situés dans la gaine de part et d'autre du curseur (41) et reliés d'un côté au curseur (41) et de l'autre aux fonds (49, respectivement 37) de la gaine cylindrique (32).

10. Dispositif selon la revendication 7, caractérisé en ce que les piliers (11a, 11b, 11c) sont soutenus par des étançons (19-19c).

## Claims

1. Device for harnessing wind energy comprising a central turbine consisting of a rotor (2), a vertical shaft (8) and blades (3) elongated axially with respect to said shaft (8), the blades being orientated radially in the horizontal plane, and comprising means (6) for harnessing kinetic energy, orientable means for masking the blades, and means for supporting the turbine, characterized in that the means (6) for harnessing kinetic energy consist of a plurality of cells provided in the active surface area of each of the blades.

2. Device according to claim 1, characterized in that said means (6) are formed by at least one series of ridges (7) substantially parallel to one another.

3. Device according to claim 2, characterized in that the cells (6) are formed by two series of ridges, the first series (7) being substantially parallel to the vertical axis of the rotor and the second series (9) being substantially parallel to the horizontal edge of blades.

4. Device according to claims 3, characterized in that the means (4) for masking the blades consist of a solid panel, which rotates around the rotor.

5. Device according to claim 4, characterized in that the panel (4) is semi-cylindrical, the vertical rectilineal edges of the panel being in the plane which passes through the axis (X-X) of the rotor and parallel with the wind direction.

6. Device according to claim 4, characterized in that the panel (4) is provided to be adjustable in adequate position independently of the wind direction, in order to totally or partially mask the blades with respect to wind strength.

7. Device according to any one of the claims 1 to 6, characterized in that the means for supporting the turbine consist of at least three vertical columns (11a, 11b, 11c), connected to at least one circular ring (12) in the horizontal plane, the columns and ring forming a rigid structure which resists all actions.

8. Device according to any one of claims 1 to 7, characterized in that it comprises means (13) for absorbing shocks which enable gusts of wind to be absorbed.

9. Device according claim 8, characterized in that the shock absorbing means consist of :
— a rigid cylindrical casing (32) able to be interlocked with a first shaft (33) transmitting energy from the turbine (1),
— a second shaft (38) set on the one end in the casing, coaxially and in order to rotate, the other end of which being connected to the using device, and provided with at least one helical groove (45) advancing turning in the direction of rotation of the casing towards the end connected to the using device,
— a cylindrical cursor (41) able to longitudinally slide in the casing, and interlocked with it, with respect to rotation, by at least a rib (42) able to slide in a longitudinal groove (43) of said casing, the cursor (41) being provided with an axial bore (44) crossed by the second shaft (38) and of same diameter, with at least one helical rib (46) corresponding to the groove (45) of the shaft (38), and
— two springs (47, 48) located in the casing on both sides of the cursor (41) and in connection at one end to the cursor (41) and at the other end to the bottom (49, respectively 37) of the cylindrical casing (32).

10. Device according to claim 7 characterized in that the columns (11a, 11b, 11c) are sustained by stanchions (19-19c).

## Patentansprüche

1. Vorrichtung zur Rückgewinnung von Windenergie, bestenhend aus einer zentralen Turbine mit Rotor (2), einer senkrechten Welle (8), und Drehschaufeln (3) welche gegenüber der Welle axial gestreckt sind, wobei die Drehschaufeln in horizontaler Ebene radial ausgerichtet und mit Mitteln zur Rückgewinnung der Bewegungsenergie, mit ausrichtbaren Mitteln zur Abdeckung der Drehschaufeln, und mit Lagestabilisationsmitteln für die Turbine Ausgestattet sind, dadurchgekennzeichnet dass die Mittel (6) zur Rückgewinnung des Bewegungsenergie aus einer Mehrzahl, in dem aktiven Flächenraum der jeweiligen Drehschaufeln vorgesehener Zellen bestehen.

2. Vorrichtung laut Anspruch 1, dadurch gekennzeichnet dass die genannten Mittel (6) aus zumindest einer Reihe von untereinander weitgehend parallel verlaufenden Stegen (7) gebildet sind.

3. Vorrichtung laut Anspruch 2, dadurch gekennzeichnet dass die Zellen (6) aus zwei Reihen von Stegen gebildet sind, wobei die erste Reihe (7) weitgehend parallel zur Senkrechtachse des Rotors und die zweite Reihe (9) weitgehend parallel zur horizontalen Schmalseite der Drehschaufeln verlaüft.

4. Vorrichtung gemäss Anspruch 3, dadurch gekennzeichnet dass die Mittel (4) zur Abdeckung des Drehschaufeln aus einer beweglichen, sich um den Rotor drehenden, vollwandigen Platte bestehen.

5. Vorrichtung laut Anspruch 4, dadurch gekennzeichnet dass die Platte (4) halbzylindrischer Form ist, wobei die geradlinigen Senkrechtkanten der Platte in einer Ebene verlaufen, welche durch die Achse X-X des Rotors indurchführt und parallel zur Windrichtung steht.

6. Vorrichtung laut Anspruch 4, dadurch gekennzeichnet dass die Platte (4) in die zwekmässigste Lage unabhängig von der Windrichtung eingestellt werden kann, sodass die Drehschaufeln je nach Windstärke teilweise oder vollständig abgedeckt werden können.

7. Vorrichtung laut einem der Ansprüche 1 bis 6, dadurch gekennseichnet dass die Lagestabilisationsmittel für die Turbine aus zumindest drei senkrechten Pfosten (11a, 11b, 11c) bestehen, und in einer horizontalen Ebene durch zumindest einen kreisförmigen Drehkranz (12) untereinander verbunden sind, wobei die Pfosten und der Drehkranz einen jeder Beanspruchung widerstehenden starren Block bilden.

8. Vorrichtung laut einem der Ansprüche 1 bis 7, dadurch gekennzeichnet dass sie mit Dämpfungsmitteln (13) versehen ist, durch welche die Windstösse abgefangen werden können.

9. Vorrichtung laut Anspruch 8, dadurch gekennzeichnet dass die Dämpfungsmittel ausgestattet sind :
— mit einer starren Zylindrischen Hülle (32) welche mit einer die Energie der Turbine übertragenden ersten Welle (33) fest verbunden werden kann,
— mit einer koaxial, einseitig und drehbar in die Hülle eingebauten zweiten Welle (38), deren gegenüberliegendes Ende mit der Nutzvorrichtung verbunden und mit zumindest einer in Drehrichtung und zur Nutzvorrichtung weisenden spiralförmigen Nute (45) versehen ist,
— mit einem zylindrischen, in Längsrichtung in der Hülle gleitbar eingebauten Schieber, drehbar mit der Hülle verbunden durch zumindest eine Rippe (42) welche in einer länglich zu dieser angeordneten Nute (43) gleitet, wobei des Schieber (41) mit einer axialen Bohrung (44) versehen ist, durch welche die zweite Welle (38) mit demselben Durchmesser hindurchgeführt wird ; hierbei hat diese zweite Welle zumindest eine spiralförmige Rippe (46) welche der Nute (45) von Welle (38) entspricht.
— mit zwei Federn (47, 48) in der Hülle beiderseits des Schiebers (41) einerseits mit dem Schieber (41) und anderseits mit den jeweiligen Böden (49, 37) der zylindrischen Hülle (32) verbunden.

10. Vorrichtung gemäss Anspruch 7, dadurch gekennzeichnet dass die Pfosten (11a, 11b, 11c) durch Stempel (19-19c) abgestützt sind.

Fig:1

Fig:3

Fig:2

Fig.4

*Fig:5*

*Fig:6*

0 065 902

Fig. 7